# EUROPÄISCHE PATENTANMELDUNG

(11) **EP 0 774 877 A2**
(43) Veröffentlichungstag der Anmeldung: **21.05.1997**
(21) Anmeldenummer: 96203111.8
(22) Anmeldetag: 07.11.1996
(51) Int. Cl.: H04Q 11/04, H04M 11/06

(54) **ISDN-Endgerät mit aktivierbarer/deaktivierbarer Befehlssatzerweiterung**

(30) Priorität: 16.11.1995 DE 19542724
(71) Anmelder: Philips Patentverwaltung GmbH, 22335 Hamburg (DE); PHILIPS ELECTRONICS N.V., 5621 BA Eindhoven (NL)
(72) Erfinder: Michler, Bernhard,, 22335 Hamburg (DE); Nothdurft, Thomas,, 22335 Hamburg (DE)
(74) Vertreter: Schmalz, Günther

(57) **Zusammenfassung**

Die Erfindung betrifft ein ISDN-Endgerät (1) mit einer Datenschnittstelle (7), insbesondere einer V.24-Schnittstelle, die zur Kopplung mit einem Datenendgerät (9), vorzugsweise eines PC dient.

Um eine erhöhte Funktionalität des Datenendgeräts (9) beim Betrieb des ISDN-Endgeräts (1) zu ermöglichen ist vorgesehen, im ISDN-Endgerät (1) eine aktivierbare/deaktivierbare Befehlssatzerweiterung vorzusehen. Bei aktivierter Befehlssatzerweiterung durch eine Übertragung von in der Erweiterung enthaltenen Steuerbefehlen vom Datenendgerät (9) über die Datenschnittstelle zum ISDN-Endgerät (1) sind Änderungen des Betriebszustandes des ISDN-Endgerätes (1) bewirkbar.

Die Erfindung findet insbesondere auf dem Gebiet der ISDN-TK-Anlagen Anwendung. Die Erfindung bezieht sich auch auf Anwendungen, bei denen eine ISDN-Karte (20) anstelle des ISDN-Endgeräts (1) eingesetzt wird.

## Beschreibung

Die Erfindung betrifft ein ISDN-Endgerät mit einer Datenschnittstelle, die zur Kopplung mit einem Datenendgerät dient.

Vorzugsweise wird eines solches Gerät als Endgerät einer TK-Anlage (Telekommunikations-Anlage, Nebenstellenanlage) auf dem Gebiet der ISDN-Technik ("Integrated Services Digital Network") eingesetzt.

ISDN-Telefone des Typs Philips Octophon 86 weisen Datenschnittstellen (V.24-Schnittstellen) auf. Sie werden als Endgeräte für ISDN-TK-Anlagen verwendet. Um zwischen Datenendgeräten (Rechner, PC) Daten über die ISDN-TK-Anlagen und gegebenenfalls auch über ein öffentliches ISDN-Netz zu übertragen, werden die Datenschnittstellen (COM-Schnittstellen) der Datenendgeräte mit jeweils einer Datenschnittstelle (V.24-Schnittstelle) eines ISDN-Telefons gekoppelt. Die ISDN-Telefone dienen bei der Datenübertragung zwischen den Datenendgeräten zur Anpassung an ISDN-Übertragungkanäle. Die ISDN-Telefone sind somit bei der Datenübertragung Schnittstellen zu ISDN-TK-Anlagen bzw. zu öffentlichen ISDN-Netzen. Die Rahmenbedingungen und die vermittlungstechnische Signalisierung der Datenübertragung wird von den jeweiligen Datenendgeräten mittels sogenannter AT-Befehle gesteuert, die im Hayes-Standard zusammengefaßt sind. Der Hayes-Standard war ursprünglich zur Steuerung von Modems vorgesehen, über die Datenendgeräte an analoge Fernsprechnetze angeschlossen werden.

Der Erfindung liegt die Aufgabe zugrunde, das eingangs genannte ISDN-Endgerät derart zu modifizieren, daß eine erhöhte Funktionalität des Datenendgeräts beim Betrieb des ISDN-Endgeräts ermöglicht wird.

Die Aufgabe wird dadurch gelöst, daß im ISDN-Endgerät eine aktivierbare und deaktivierbare Befehlssatzerweiterung vorgesehen ist und daß bei aktivierter Befehlssatzerweiterung durch eine Übertragung von in der Erweiterung enthaltenen Steuerbefehlen vom Datenendgerät über die Datenschnittstelle zum ISDN-Endgerät Änderungen des Betriebszustandes des ISDN-Endgerätes bewirkbar sind.

Durch die Aktivierung der Befehlssatzerweiterung, die den ursprünglichen Befehlssatz des ISDN-Endgeräts mit Programm- und Steuerbefehlen um weitere Befehle ergänzt, wird eine Fernsteuerung über die schon ohnehin vorhandene Datenschnittstelle des ISDN-Endgeräts mit Hilfe des Datenendgeräts ermöglicht und das Datenendgerät zusätzlich zur ursprünglichen Datenübertragungsfunktion in den Betrieb des ISDN-Endgeräts einbezogen. Der zusätzliche technische Aufwand kann auf Änderungen der Software beschränkt werden. Die Erfindung ist insbesondere für Anordnungen mit einer V.24-Datenschnittstelle vorteilhaft. Aber auch die Anwendung auf andere Datenschnittstellen (z.B. X.21-Schnittstellen) ist grundsätzlich möglich.

Insbesondere Änderungen des Vermittlungszustandes des ISDN-Endgeräts kommen als Betriebszustandsänderungen in Betracht. Als ISDN-Endgeräte kommen vorzugsweise Fernsprechapparate in Betracht. Doch auch für andere Endgeräte, z.B. Faxgeräte, ist die Anwendung der Erfindung vorteilhaft. Um Störungen bei einer normalen Datenübertragung vom Datenendgerät über die Datenschnittstelle oder über die Datenschnittstelle zum Datenendgerät auszuschließen, die insbesondere bei einer als V.24-Schnittstelle ausgeführten Datenschnittstelle auftreten können, wird während einer solchen Datenübertragung die Befehlssatzerweiterung deaktiviert. Dies hat auf die erhöhte Funktionalität des aus dem ISDN-Endgerät und dem Datenendgerät bestehenden Systems aber nur unwesentlichen Einfluß.

In einer Ausgestaltung der Erfindung ist vorgesehen, daß eine Aktivierung der Befehlssatzerweiterung eine automatische Übertragung von Informationen, die Betriebszustände des ISDN-Endgeräts betreffen, vom ISDN-Endgerät über die Datenschnittstelle zum Datenendgerät bewirkt. Durch die Aktivierung der Befehlssatzerweiterung wird die beschriebene automatische Übertragung von Betriebszustände des ISDN-Endgeräts betreffenden Informationen, insbesondere die Signalisierung von tatsächlichen oder potentiellen Verbindungszustandsänderungen, auf einfache Weise bewirkt und das Datenendgerät zusätzlich zur ursprünglichen Datenübertragungsfunktion über die erwähnte Möglichkeit zur Fernsteuerung hinaus in den Betrieb des ISDN-Endgeräts einbezogen. Prinzipiell kommen vergangene, aktuelle oder zukünftige Betriebszustände, insbesondere Betriebszustandsänderungen als Ursache für die erfindungsgemäße Übertragung von Informationen an das Datenendgerät in Frage. Eine Fernüberwachung des ISDN-Endgeräts ist nun möglich, insbesondere während des Arbeitens mit dem Datenendgerät, beispielsweise während der Bearbeitung von Dateien am als PC ausgeführten Datenendgerät. So kann beispielsweise eine Sekretärin während der Arbeit an einer Textdatei eines Textverarbeitungsprogramms unter Benutzung eines PC gleichzeitig Meldungen eines an den PC auf die beschriebene Weise angeschlossenen ISDN-Telefons empfangen.

Für den Fall, daß die automatisch zum Datenendgerät übertragenen und Betriebszustände des ISDN-Endgeräts betreffenden Informationen mittels einer Anzeigevorrichtung des Datenendgeräts visualisierbar sind, wird ein am Datenendgerät arbeitender Benutzer ohne Verzögerung über tatsächliche oder potentielle Änderungen des Betriebszustandes - insbesondere des Verbindungszustandes - des ISDN-Endgeräts informiert. Er kann deshalb ohne Verzögerung auf solche Änderungen reagieren.

Die Erfindung kann weiterhin dadurch erweitert werden, daß eine Zuordnung von jeweils einem eindeutigen Kennzeichen zu einem Verbindungszustand des ISDN-Endgeräts vorgesehen ist. Auf diese Weise wird sichergestellt, daß Verbindungszustände immer eindeutig identifizierbar sind, obwohl beispielsweise ISDN-Telefone mehrere Verbindungen gleichzeitig aufrechterhalten können.

Werden kommende Rufe an das Datenendgerät signalisiert und mit Hilfe des Datenendgeräts aufgezeichnet, ist hierdurch mit Hilfe des Datenendgeräts eine Überwachung der Telekommunikation mit anderen Teilnehmern möglich. Sowohl die Anzahl der Rufe als auch die Rufnummern oder Namen der anrufenden anderen Teilnehmer können so mit Hilfe des angeschlossenen Datenendgerätes dokumentiert werden.

Bei einer Modifizierung der Erfindung ist durch das Datenendgerät eine Selektion von an das ISDN-Endgerät gesendeten Rufen vorgesehen, so daß nur eine eingeschränkte Menge der Rufe die Abgabe eines akustischen oder visuellen Rufsignals an den Benutzer bewirkt. Dementsprechend sind durch den Benutzer Teilnehmergruppen definierbar, mit denen er während eines vorgebbaren Zeitraums kommunizieren will. Rufsignale von anderen Teilnehmern werden währenddessen unterdrückt. Hierbei werden die Rufsignale vom Datenendgerät erzeugt. Die Abgabe von akustischen oder visuellen Rufsignalen durch das ISDN-Endgerät wird unterdrückt.

Bei einer anderen Modifizierung der Erfindung ist eine Gesprächsdauerermittlung und -aufzeichnung durch das Datenendgerät vorgesehen. Genaue Statistiken über geführte Telefongespräche lassen sich so erstellen, was beispielsweise für Rechtsanwälte zur Erstellung von Rechnungen ausnutzbar ist. Eine andere Anwendung ist die Überwachung der eigenen Telefongebühren.

In einer weiteren Ausgestaltung der Erfindung korrespondiert der Empfang von bestimmten Rufen durch das ISDN-Endgerät mit einer Aktivierung vorgebbarer Datenverarbeitungszustände im Datenendgerät. Beispielsweise wird bei einem eingehenden Ruf von einem anderen Teilnehmer, zu dem eine bestimmte Datei im als PC ausgeführten Datenendgerät existiert, diese Datei automatisch in den Arbeitsspeicher des Datenendgeräts geladen. Ohne zusätzliche Arbeitsschritte werden so Daten des anrufenden Teilnehmers zur Verfügung gestellt. Gleichzeitig ist eine Änderung der Daten des anrufenden Teilnehmers möglich. Damit wird eine erhöhte Effektivität im Rahmen von Kundengesprächen im Wirtschaftverkehr bewirkt.

Die Erfindung betrifft auch ein Telekommunikationssystem mit einem ISDN-Endgerät mit einer Datenschnittstelle und einem Datenendgerät, das über die Datenschnittstelle mit dem Datenendgerät gekoppelt ist. Im ISDN-Endgerät ist eine aktivierbare/deaktivierbare Befehlssatzerweiterung vorgesehen ist und bei aktivierter Befehlssatzerweiterung sind durch eine Übertragung von in der Erweiterung enthaltenen Steuerbefehlen vom Datenendgerät über die Datenschnittstelle zum ISDN-Endgerät Änderungen des Betriebszustandes des ISDN-Endgerätes bewirkbar.

Weiterhin bezieht sich die Erfindung auf ein Datenendgerät mit einer ISDN-Karte, die über eine Datenschnittstelle mit mikroprozessorgesteuerten Einheiten des Datenendgeräts 1 gekoppelt ist. In der ISDN-Karte ist eine aktivierbare/deaktivierbare Befehlssatzerweiterung vorgesehen ist und bei aktivierter Befehlssatzerweiterung sind durch eine Übertragung von in der Erweiterung enthaltenen Steuerbefehlen über die Datenschnittstelle zur ISDN-Karte Änderungen des Betriebszustandes der ISDN-Karte bewirkbar.

Die Erfindung wird nachstehend anhand der Zeichnungen näher erläutert. Es zeigen:

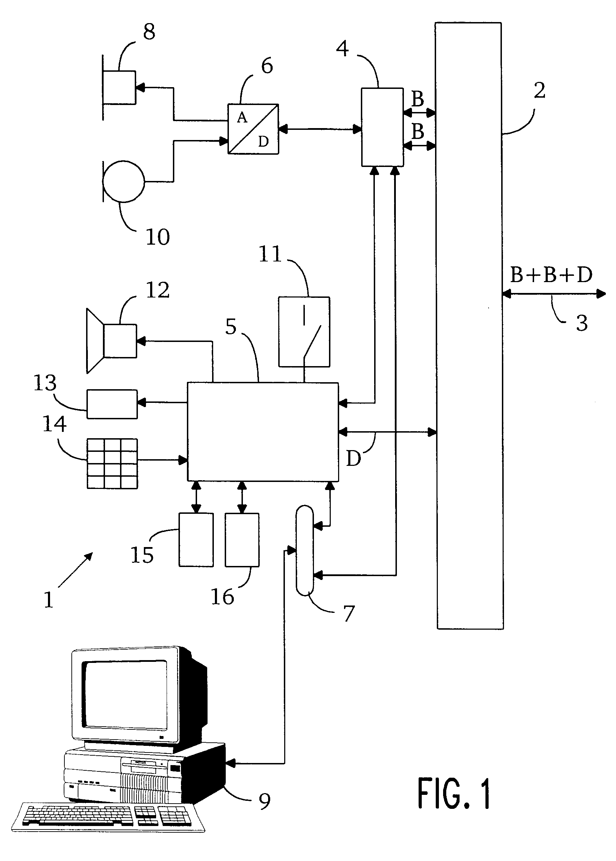

- Fig. 1: ein Blockschaltbild eines erfindungsgemäßen ISDN-Endgeräts, das mit einem Datenendgerät verbunden ist und
- Fig. 2: ein Blockschaltbild des Datenendgeräts mit einer das ISDN-Endgerät ersetzenden ISDN-Karte.

Das dargestellte ISDN-Endgerät 1, in diesem Fall ein ISDN-Fernsprechapparat mit an sich bekannter Hardware, enthält einen Multiplexer/Demultiplexer 2. Als ISDN-Endgerät könnte aber beispielsweise auch ein Faxgerät vorgesehen sein. Der Multiplexer/Demultiplexer 2 empfangt über eine nicht dargestellte S0-Schnittstelle des ISDN-Endgeräts 1 digitale Daten, die von einer Vermittlungsstelle an das ISDN-Endgerät 1 geliefert werden. Die digitalen Daten sind in zwei B-Kanälen und einem D-Kanal organisiert. Die bidirektionale Datenübertragung zwischen dem Multiplexer/Demultiplexer 2 und der S0-Schnittstelle ist durch einen mit dem Bezugszeichen 3 versehenen Doppelpfeil dargestellt. Von der S0-Schnittstelle kommende digitale Daten werden vom Multiplexer/Demultiplexer 2 einem Demultiplex-Verfahren unterworfen, so daß eine getrennte Ausgabe der beiden B-Kanäle und des D-Kanals, über den Signalisierungsinformationen übertragen werden, erfolgt. Die digitalen Daten der beiden B-Kanäle werden einer Funktionseinheit 4 zugeführt, die die digitalen Daten in Abhängigkeit von Steuersignalen eines Mikroprozessors 5 entweder einem Funktionsblock 6 oder einer Datenschnittstelle 7 zuführt. Der Funktionsblock 6 enthält Mittel zur Digital-Analog-Wandlung, mit deren Hilfe die von der Funktionseinheit 4 gelieferten digitalen Daten in Analogsignale umgewandelt werden, die von einem mit dem Funktionsblock gekoppelten Fernhörer 8 als akustische Signale ausgegeben werden.

Digitale Daten, die von der Funktionseinheit 4 an die Datenschnittstelle 7 übertragen werden, werden an ein an die Datenschnittstelle 7 angeschlossenes Datenendgerät (Rechner, PC) 9 ausgegeben. Im vorliegenden Ausführungsbeispiel ist die Datenschnittstelle mit der COM-Schnittstelle eines PC verbunden. Eine Datenübertragung über die Datenschnittstelle 7 wird mit Hilfe des Mikroprozessors 5 gesteuert. Dies gilt auch für eine Datenübertragung in umgekehrter Richtung. Im vorliegenden Fall ist die Datenschnittstelle 7 als V.24-Schnittstelle ausgeführt.

Von der S0-Schnittstelle des ISDN-Endgeräts 1 kommende Signalisierungsdaten des D-Kanals werden vom Multiplexer/Demultiplexer 2 dem von der S0-Schnittstelle kommenden Datenstrom entnommen und dem Mikroprozessor 5 zugeführt. Die Signalisierungsdaten werden vom Mikroprozessor 5 ausgewertet. Der Mikroprozessor 5 bestimmt anhand der Signalisierungsdaten auch, ob und welche B-Kanal-Daten von der Funktionseinheit 4 zur Analogausgabe an den Funktionsblock 6 oder an die Datenschnittstelle 7 weitergeleitet werden.

Über ein Mikrofon 10 empfangene Analogsignale werden vom Funktionsblock 6 einer Analog-Digital-Wandlung unterzogen und als Digitalsignale an die Funktionseinheit 4 geliefert. Der Funktionseinheit 4 werden weiterhin Digitalsignale zugeführt, die vom Datenendgerät 9 generiert und über die Datenschnittstelle 7 an die Funktionseinheit 4 übertragen werden. Der Multiplexer/Demultiplexer 2 unterwirft die von der Funktionseinheit 4 und dem Mikroprozessor 5 gelieferten Digitalsignale einem Multiplex-Verfahren und generiert einen Datenstrom, der aus zwei B-Kanälen und einem D-Kanal besteht und an die S0-Schnittstelle zur Weiterleitung in ein Vermittlungsnetz übertragen wird. Den aus den Signalen des Mikrofons 10 und des Datenendgeräts 9 abgeleiteten Daten wird mit Hilfe von Steuersignalen des Mikroprozessors 5 jeweils ein B-Kanal zugeordnet. D-Kanal-Daten werden direkt vom Mikroprozessor 5 an den Multiplexer/Demultiplexer 2 geliefert.

Mit dem Mikroprozessor 5 sind weiterhin ein Gabelumschalter 11, ein Lautsprecher 12, eine Anzeigevorrichtung (Display) 13 und eine Eingabevorrichtung (Tastatur) 14 gekoppelt. Signale, die vom Gabelumschalter 11 oder der Eingabevorrichtung 14 generiert werden, werden vom Mikroprozessor 5 umgesetzt und in den D-Kanal-Datenstrom eingefügt. Der Lautsprecher dient zur Ausgabe von Sprach- oder Rufsignalen.

Weiterhin sind nichtflüchtige Speichermittel 15 und flüchtige Speichermittel 16 mit dem Mikroprozessor 5 gekoppelt. In den nichtflüchtigen Speichermitteln (insbesondere EEPROMs) sind Programme und Daten zum Betrieb des ISDN-Endgeräts 1 abgelegt. Die flüchtigen Speichermittel 16 (RAM) dienen als Arbeitsspeicher.

Bei der Datenübertragung vom Datenendgerät 9 über das ISDN-Endgerät 1 in ein Vermittlungsnetz zu einem anderen Endgerät wirkt das ISDN-Endgerät 1 analog zur Funktionsweise eines Modem (Modulator-Demodulator) als Schnittstelle zum Vermittlungsnetz. Modems dienen zur Umwandlung digitaler Signale eines Datenendgeräts in analoge Signale für die Übertragung über ein analoges Vermittlungsnetz. Der für die Steuerung von Modems übliche Hayes-Befehlssatz (sogenannter AT-Befehlssatz) wird auch bei der Datenübertragung von Datenendgeräten über ISDN-Endgeräte und digitale ISDN-Vermittlungsnetze zu anderen Datenendgeräten wie im vorliegenden Ausführungsbeispiel verwendet. Durch die Verwendung des AT-Befehlssatzes wird eine einfache Steuerung der Funktionen des ISDN-Endgeräts 1 bei der Datenübertragung vom Datenendgerät aus gewährleistet, da eine Steuerung mittels Generierung und Übertragung von ASCII-Zeichen erfolgt und hierfür einfache Terminalprogramme des Datenendgeräts 9 ausreichen. Die Umsetzung der übertragenenen AT-Befehle erfolgt mittels des Mikroprozessors 5 in Abhängigkeit von in den nichtflüchtigen Speichermitteln 15 abgelegter Software, der der Befehlssatz gemäß dem Hayes-Standard zugrunde liegt. Auf sonstige bekannte Software-Anteile zur Steuerung üblicher Funktionen des ISDN-Endgeräts 1 wird nicht nicht weiter eingegangen.

Beim vorliegenden Ausführungsbeispiel ist der Hayes-Befehlssatz um eine aktivierbare/deaktivierbare Befehlssatzerweiterung mit zusätzlichen AT-Befehlen ergänzt. Die Aktivierung der Befehlssatzerweiterung entspricht der Aktivierung von zusätzlichen Programmeinheiten des ISDN-Endgeräts 1. Diese und andere Programmeinheiten sind im Programmspeicher (Teil der nichtflüchtigen Speichermittel 15) des ISDN-Endgeräts 1 gespeichert. Die Aktivierung erfolgt mittels eines besonderen zusätzlichen AT-Befehls ("AT$STA1", siehe unten) dadurch, daß der Zustand (Binärwert) eines den zusätzlichen Programmeinheiten zugeordneten Flags (Signal-Bit) geändert wird. Von diesem Flag wird eine entsprechende Programmverweigung abhängig gemacht, so daß die zusätzlichen Programmeinheiten im aktivierten Zustand beim Programmablauf während des Betriebs des ISDN-Endgeräts 1 durchlaufen werden. Zur Deaktivierung der zusätzlichen Programmeinheiten wird das Flag in seinen anderen Zustand versetzt, d.h. der Binärwert des Flags wird geändert. Die zusätzlichen Programmeinheiten werden dann nicht mehr durchlaufen.

Die Befehlssatzerweiterung wird bei einer normalen Datenübertragung (Datenübertragung zwischen dem Datenendgerät 9 und einem anderen nicht dargestellten Datenendgerät) über die als V.24-Schnittstelle ausgeführte Datenschnittstelle durch das ISDN-Endgerät 1 selbst deaktiviert, um Störungen eines aktiven Datenübertragungsprogramms des Datenendgeräts 9 zu vermeiden. Dazu sind im ISDN-Endgerät 1 Programmeinheiten vorgesehen, die das Vorliegen einer normalen Datenübertragung detektieren und die Deaktivierung mittels Zustandsänderung des den zusätzlichen Programmeinheiten zugeordneten Flags wie oben beschrieben bewirken.

Die zu vermeidenden Störungen werden nun kurz erläutert. Das Datenendgerät 9 bzw. dessen Software ist in Bezug auf eine Datenübertragung zwischen dem Datenendgerät 9 und einem anderen Datenendgerät über das zwischengeschaltete ISDN-Endgerät 1 so ausgelegt, daß alle Zeichen, die von der Datenschnittstelle 7 kommen, als Zeichen interpretiert werden, die von dem anderen Datenendgerät generiert und übertragen wurden. Würde nun das Datenendgerät 9 während einer solchen Datenübertragung von der Datenübertragung unabhängige Steuerbefehle erzeugen und über die Datenschnittstelle 7 übertragen, oder wurden vom ISDN-Endgerät 1 von einer solchen Datenübertragung unabhängige Statusmeldungen über die Datenschnittstelle 7 an das Datenendgerät 9 übertragen, dann würden die Steuerbefehle bzw. Statusmeldungen als Zeichen (Daten) interpretiert, die vom anderen Datenendgerät an das Datenendgerät 9 übertragen wurden. Diese falsche Interpretation würde zu den erwähnten Störungen des Datenübertragungsprogramms des Datenendgeräts 9 führen.

Die AT-Befehle zur Aktivierung/Deaktivierung der erwähnten Befehlssatzerweiterung stellen eine feste Erweiterung des AT-Befehlssatzes dar. Ob die Befehlserweiterung aktiviert oder deaktiviert ist, wird in den flüchtigen Speichermitteln (RAM) 16 gespeichert, d.h. dort ist das entsprechende Flag gespeichert. Anstelle des Abspeicherns in den flüchtigen Speichermitteln 16 kann auch ein Abspeichern in den nichtflüchtigen Speichermitteln (EEPROM) 15 vorgesehen werden. Bei aktivierter Befehlserweiterung befindet sich das ISDN-Endgerät 1 im sogenannten erweiterten Modus.

Nach einer Aktivierung der Befehlssatzerweiterung ist es möglich, durch Übertragung von entsprechenden zusätzlichen AT-Befehlen vom Datenendgerät 9 über die Datenschnittstelle 7 zum ISDN-Endgerät 1 den Betriebszustand des ISDN-Endgeräts 1 fernzusteuern, insbesondere den Verbindungszustand zu beeinflussen. Weiterhin überträgt das ISDN-Endgerät 1 bei aktivierter Befehlssatzerweiterung Statusmeldungen an das Datenendgerät 9, wobei die Ausgabe von Statusmeldungen während bestehender Datenverbindungen des Datenendgeräts 9 unterdrückt wird. Die Aktivierung der Befehlssatzerweiterung korrespondiert dementsprechend mit einer Aktivierung von Programmeinheiten, die die Ausgabe solcher Statusmeldungen bewirken. Im vorliegenden Fall ist den Programmeinheiten für die Bearbeitung der zusätzlichen AT-Befehle und den Programmeinheiten für die Ausgabe der Statusmeldungen gemeinsam ein einziges Flag zugeordnet, von dessen Zustand es abhängt, ob diese zusätzlichen Programmeinheiten aktiviert oder deaktiviert sind. Eine andere Möglichkeit wäre es, den Programmeinheiten für die Bearbeitung der zusätzlichen AT-Befehle ein erstes Flag und den Programmeinheiten für die Ausgabe der Statusmeldungen ein zweites Flag zuzuordnen. Dann wäre eine getrennte Aktivierung/Deaktivierung der beiden genannten Programmeinheitsgruppen möglich.

Die folgende Tabelle enthält AT-Befehle um die der bisher bekannte Hayes-Befehlssatz erweitert ist und mit denen eine Steuerung des ISDN-Endgeräts 1 vom Datenendgerät 1 aus erfolgt. Weiterhin sind die zugehörigen ausgelösten Funktionen des ISDN-Endgeräts 1 beschrieben. Alle zum bisherigen AT-Befehlssatz neu hinzugekommenen AT-Befehle weisen ein Präfix "AT$" auf, was sie von bisherigen AT-Befehlen unterscheidet, die ebenfalls mit den Buchstaben "AT" beginnen und deren Präfixe kein "$"-Zeichen aufweisen.

| Befehl | Befehlserläuterung |
|---|---|
| AT$STA1 | "Status"; Aktivierung der Befehlserweiterung |
| AT$STA0 | "Status"; Deaktivierung der Befehlserweiterung |
| AT$CAL〈N〉 | "Call"; Aufbau einer Verbindung mit einem Endgerät mit der Rufnummer N; Funktion entspricht dem Betätigen einer Zielwahltaste im Fernsprechdienst |
| AT$CON〈N〉 | "Consultation Call"; Aufbau einer Rückfrageverbindung mit einem Endgerät mit der Rufnummer N; die aktuelle Verbindung wird aufrechterhalten |
| AT$ANS〈Trid〉 | "Answer Call"; Annahme eines kommenden Rufes, dem das Kennzeichen Trid (Transaktionsidentifikator) zugeordnet ist (stellt hier eine Ziffer von 0 bis 9 dar) |
| AT$REL〈Trid〉 | "Release Call"; Auslösen einer Verbindung, der das Kennzeichen Trid zugeordnet ist |
| AT$ALT | "Alternate Call"; Makeln/ Annahme eines Anklopfers |
| AT$RET | "Retrieve Call"; Aktivieren einer gehaltenen Verbindung |
| AT$TRA | "Transfer Call"; Übergabe einer aktuellen Verbindung (auch im Aufbau befindliche Verbindungen und Verbindungen, bei denen der andere Anschluß besetzt ist, sind eingeschlossen) an eine gehaltene Verbindung |

Vom Datenendgerät 9 an das ISDN-Endgerät 1 übertragenen Steuerbefehle (AT-Befehle) werden durch folgende zwei Meldungen des ISDN-Endgeräts 1 an das Datenendgerät 9 quittiert:

### 1) ACK 〈Trid〉 〈Kommandowiederholung〉

Diese Meldung ("Acknowledge") entspricht einer positiven Quittierung. Das Kennzeichen Trid ("Transaktionsidentifikator") wurde entweder dem zugehörigen Steuerbefehl entnommen oder es wurde ein neues Kennzeichen Trid vergeben. Ein solches Kennzeichen ermöglicht eine eindeutige Zuordnung zu Transaktionen des ISDN-Endgeräts 1 und wird vom ISDN-Endgerät 1 vergeben. Eine Transaktion bezieht sich hier auf alle Vorgänge, die den Aufbau und Abbau einer Verbindung zu einem anderen Teilnehmeranschluß und eine bestehende Verbindung betreffen.

### 2) 〈REJ〉 〈Trid〉 〈Grund〉 〈Kommandowiederholung〉

Diese Meldung ("Reject") entspricht einer negativen Quittierung. Die Funktion, die durch durch den vorrausgehenden Steuerbefehl ausgelöst werden sollte, wurde nicht ausgeführt. Der Grund für die Nichtausführung der Funktion wird als Sedezimalzahl angegeben.

Das ISDN-Endgerät 1 gibt Statusmeldungen in folgendem Format aus:
〈Zustand〉 〈Trid〉 [〈Parameter〉]

Eine Statusmeldung enthält also einen ersten Anteil, der den Zustand des ISDN-Endgeräts 1 beschreibt, einen zweiten Anteil (Trid), der als Kennzeichen für eine zugehörige Transaktion dient, und einen optionalen dritten Anteil, der Werte für Parameter der Zustandsinformation enthält.

Das mit Trid ("Transaktionsidentifikator") bezeichnet Kennzeichen ermöglicht beim hier vorliegenden ISDN-Telefon 1 eine eindeutige Identifizierung mehrerer Transaktionen bzw. Fernsprechverbindungen. Im vorliegenden Fall besteht ein solches Kennzeichen aus einer Kennziffer von 0 bis 9. Jeder Fernsprechverbindung wird genau eine Kennziffer zugeordnet. Einer aktuellen Fernsprechverbindung, die mittels der Anzeigevorrichtung 13 angezeigt wird, wird eine dieser Kennziffern fest zugeordnet und ist mittels dieser vorgebbaren Kennziffer identifizierbar. Die Vergabe der Kennziffer erfolgt durch das ISDN-Endgerät 1. Dies ermöglicht die gleichzeitige Handhabung mehrerer Transaktionen im ISDN-Endgerät 1.

Durch eine Tabelle werden im folgenden Beispiele für Zustände und zugehörige Parameter von Statusmeldungen dargestellt.

| Zustand | Zustandsbeschreibung | Parameter |
|---|---|---|
| SPS | "Speech Start"; Zustandsinformation über die erfolgreiche Durchschaltung eines B-Kanals zu einem anderen Teilnehmeranschluß; Gesprächsbeginn bei Fernsprechverbindungen | DTE, DAD, CIF |
| SPE | "Speech End"; Zustandsinformation über das Auftrennen eines zu einem anderen Teilnehmeranschluß durchgeschalteten B-Kanals beim Abbau einer Verbindung zu einem anderen Teilnehmeranschluß; Gesprächsende bei Fernsprechverbindungen | DTE, CIF |
| REL | "Release"; Zustandsinformation über den vollständigen Abbau einer Verbindung zu einem anderen Teilnehmeranschluß (D-Kanal-Meldung) | DTE, CAU, CIF |
| INF | Information über Gebühren, Rufnummern oder Rufnummernänderungen im Gespräch beispielsweise bei Weitervermittlungen von Gesprächen sowie über Wahlziffern beim gehenden Verbindungsaufbau | CIF, OAD, OPN, DAD |
| USE | Zustandsinformation über die Belegung einer neuen Transaktion durch das Telefon (z.B. bei einem gehenden Verbindungsaufbau) oder über die Aktivierung einer anderen bereits bestehenden Tansaktion (z.B. beim Makeln) | |
| CAL | "Call"; Zustandsinformation über einen kommenden Fernsprechruf | OAD, OPN, RAD, RPN |
| DIS | "Disconnect"; Zustandsinformation über eine aus dem Vermittlungsnetz empfangene Meldung über einen Verbindungsabbau (z.B. von einer TK-Anlage erzeugt) | CAU, DTE |

Die angegebenen Parameter sind folgendermaßen aufgebaut:
〈Kennung〉 〈Wert〉[$〈Kennung〉 〈Wert〉][$〈Kennung〉 〈Wert〉]...

Ein Parameter enthält somit mindestens eine Kennung mit einem zugeordnetem Wert. Prinzipiell sind beliebig viele Kennungen mit zugeordneten Werten möglich, zwischen denen wie oben angedeutet jeweils ein Trennzeichen (hier: "$") angeordnet ist.

Beispiele für Kennungen mit zugeordneten Werten werden nachstehend in einer weiteren Tabelle angegeben:

| Kennung | Erläuterung der Kennung | Wert |
|---|---|---|
| CAU | "Cause"; Übertragung des Auslösegrundes | zweistellige Sedezimalzahl |
| CIF | "Charging Information"; Gebühreninformation | Anzahl der Gebühreneinheiten als Dezimal-String |
| DTE | "Date"; Datum und Uhrzeit | z.B. "10.05.95-15:46:20" |
| DAD | "Destination Address" | Rufnummer eines anderen Teilnehmers, zu dem vom eigenen Endgerät aus eine Verbindung aufgebaut wird |
| OAD | "Origination Address" | Rufnummer, die einem kommenden Ruf zugeordnet ist |
| OPN | "Origination Party Name" | Name eines Teilnehmers, der einem kommenden Ruf zugeordnet ist |
| RAD | "Redirected Address" | Rufnummer eines Teilnehmer, der einen Ruf umleitet |
| RPN | "Redirected Party Name" | Name eines Teilnehmers, der einen Ruf umleitet |

Im folgenden werden nun Beispiele für den Ablauf einer Steuerung des ISDN-Endgeräts 1 durch das Datenendgerät 9 angegeben. Kommentare sind durch die Symbole /* und */ eingerahmt. Befehle, die vom Datenendgerät 9 an das ISDN-Endgerät 1 über die Datenschnittstelle 7 übertragen werden, sind fett gedruckt (AT-Befehle). Aktionen der Kommunikationspartner sind in Klammern gesetzt.

### 1) Aufbau einer gehenden Verbindung:

- **AT$STA1**: /*Befehlserweiterung aktivieren, Endgerät 1 in erweiterten Modus schalten*/
- OK: /*Aktivierung wird bestätigt*/
(Benutzer gibt am Datenendgerät 9 die Rufnummer 5853 ein)
- **AT$CAL5853**: /*Einleitung eines Verbindungsaufbaus zum Teilnehmer mit der Rufnummer 5853*/
- USE1: /*Transaktion 1 wird belegt (Trid=1)*/
- INF1DAD5853: /*Information, daß als Zieladresse (Destination Adress) 5853 festgelegt wurde*/
- ACK1CAL5853: /*Bestätigung : 5853 wird gerufen*/
(Teilnehmer mit der Rufnummer 5853 nimmt den Ruf an)
- SPS1DAD5853$CPNMustermann$DTE18.09.95-15:55:01: /*Verbindung zum Teilnehmer mit der Rufnummer 5853 aufgebaut, Name des Partners (Connection Party) = Mustermann, Angabe von Datum und Uhrzeit*/
(Teilnehmer mit der Rufnummer 5853 legt auf)
- DIS1CAU0F$DTE18.09.95-15:55:01: /*Verbindungsabbau (Disconnect), Angabe des Grundes durch 0F (Auflegen des anderen Teilnehmers), Datum und Uhrzeit*/
- SPE1: /*Ende der Sprachverbindung auf Transaktion 1*/
- REL1CAU0F: /*Beendigung der Transaktion 1 mit Angabe des Grundes */

### 2) Annahme einer kommenden Verbindung:

- CAL1OAD5853$OPN Mustermann: /*kommender Ruf vom Teilnehmer mit der Rufnummer 5853 mit Namen Mustermann, zugehörige Transaktion erhält als Kennzeichen die Ziffer 1*/
(Eingabe am Datenendgerät 9, um Rufannahme zu bewirken)
- **AT$ANS1**: /*Befehl zur Annahme des kommenden Rufes*/
- USE 1: /*Transaktion 1 wird belegt (Trid=1)*/
- ACK1ANS1: /*Rufannahme bestätigt*/
- SPS1OAD5853$OPNMustermann$DTE18.09.95-16:02:01: /*Sprachkanal für Transaktion 1 geschaltet, Nummer des kommenden Rufes, Name des anderen Teilnehmers, Datum-Uhrzeit*/
(Eingabe am Datenendgerät 9, um Verbindungsabbau einzuleiten)
- **AT$DIS1**: /*Befehl zum Verbindungsabbau*/
- ACK1DIS1: /*Bestätigung, daß der Befehl ausgeführt wird*/
- SPE1: /*Sprachkanal ist unterbrochen*/
- REL1DTE18.09.95-16:02:31: /*Beendigung von Transaktion 1, Datum-Uhrzeit*/

### 3) Aufbau von 2 Verbindungen und Makeln:

(Eingabe am Datenendgerät 9, um das ISDN-Endgerät 1 in den erweiterten Modus schalten
- **AT$STA1**: /*Befehlserweiterung aktivieren, Endgerät 1 in den erweiterten Modus schalten*/
- OK: /*Aktivierung wird bestätigt*/
(Eingabe der Rufnummer 58900 am Datenendgerät 9)

### AT$CAL58900

- USE1: /*Transaktion 1 wird belegt (Trid=1)*/
- INF1DAD58900: /*Information, daß als Zieladresse (Destination Adress) die Rufnummer 58900 festgelegt wurde*/
- ACK1CAL58900: /*Bestätigung des Rufbefehles*/
- SPS1DAD58900$DTE19.09.95-10:27:31: /*Partner hat den Ruf angenommen, Angabe der Rufnummer des Partners, kein Name des Partners verfügbar, Datum-Uhrzeit*/
(Eingabe am Datenendgerät 9 für einen Ruf in Rückfrage zum Teilnehmer mit der Rufnummer 5853)

### AT$CON5853

- USE2: /*Transaktion 2 wird belegt (Trid=2)*/
- INF2DAD5853: /*Information über die zugehörige Rufnummer*/
- ACK2CON5853: /*Bestätigung des Rufbefehls*/
- SPS2DAD5853$CPNMustermann$DTE19.09.95-10:29:01: /*Partner hat angenommen, Rufnummer, Name, Datum-Uhrzeit*/
(Eingabe am Datenendgerät 9, um ein Makeln einzuleiten)

### AT$ALT

- USE1: /*Transaktion 1 wird belegt, Kommunikation mit dem Teilnehmer mit der Rufnummer **58900***/
- ACK1ALT: /*Bestätigung des Makelbefehles*/

### AT$ALT

- USE2: /*Transaktion 2 wird belegt, Kommunikation mit dem Teilnehmer mit der Rufnummer 5853*/
- ACK2ALT: /*Bestätigung des Makelbefehles*/
(Eingabe am Datenendgerät 9 zum Beenden von Transaktion 1)

### AT$REL1

- ACK1REL1: /*Bestätigung des Befehls*/
- SPE1: /*Unterbrechung des Sprachkanals*/
- REL1: /*Beendigung von Transaktion 1*/
(Eingabe am Datenendgerät 9 zum Beenden von Transaktion 2)

### AT$REL2

- ACK2REL2: /*Bestätigung des Befehls*/
- SPE2: /*Unterbrechung des Sprachkanals*/
- REL2DTE19.09.95-10:30:31: /*Beendigung von Transaktion 2, Angabe von Datum und Uhrzeit*/

Die Meldungen, die vom ISDN-Endgerät 1 an das Datenendgerät 9 übertragen werden, werden von dem Datenendgerät 9 visualisiert, d.h. mittels eines Monitors sichtbar gemacht. In einer Ausgestaltung werden die Meldungen im Datenendgerät 9 gespeichert. Insbesondere die Aufzeichnung kommender Rufe ist vorteilhaft, da auf diese Weise eine spätere statistische Auswertung (z.B. mit Hilfe des Datenendgeräts 9) ermöglicht wird.

Eine andere Weiterbildung der Erfindung sieht vor, im Datenendgerät 9 eine Selektion von Rufen vorzunehmen. Dazu wird das ISDN-Endgerät 1 stumm geschaltet, so daß es keine akustische Wiedergabe von Rufen mehr durchführt. Zur akustischen Wiedergabe von Rufen dient nun das Datenendgerät 9. Dieses enthält Software-Bausteine, die es erlauben, ein akustisches Rufsignal für bestimmte kommende Rufe zu unterdrücken. Ein Benutzer ist nun in der Lage, den Teilnehmerkreis, mit dem er während eines bestimmten Zeitraums kommunizieren will, festzulegen und die akustische Wiedergabe von Rufen anderer Teilnehmer zu unterdrücken.

Eine Gesprächsdauerermittlung und -aufzeichnung durch das Datenendgerät 9 ist eine weitere vorteilhafte Abwandlung der Erfindung. Da sowohl die Uhrzeit des Durchschaltens eines Sprachkanals (mit der Meldung SPS) als auch des Unterbrechens einer Verbindung (mit der Meldung DIS) zum Datenendgerät 9 übertragen wird, kann die Gesprächdauer ohne Schwierigkeiten vom Datenendgerät 9 ermittelt werden. Eine Aufzeichnung der Gesprächsdauern mit zugehörigen Gesprächspartnern erfolgt beispielsweise mit einer Festplatte des Datenendgeräts 9.

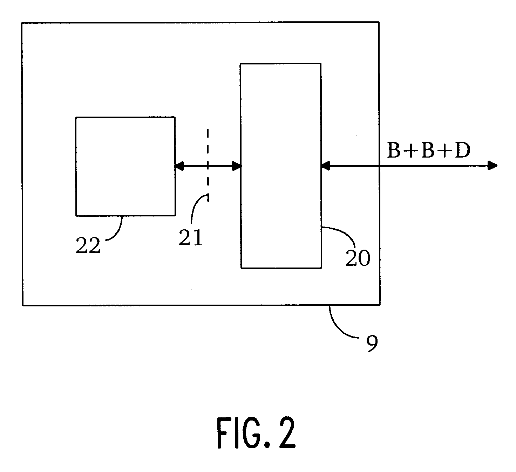

Fig. 2 zeigt eine andere Ausführungsform der Erfindung. Hier ist anstelle des ISDN-Endgeräts 1 eine ISDN-Karte 20 vorgesehen, die als Steckkarte für das hier als PC ausgeführte Datenendgerät 9 ausgeführt ist. Über eine V.24-Schnittstelle 21 ist die ISDN-Karte 20 mit den mikroprozessorgesteuerten Einheiten des Datenendgeräts 1 gekoppelt, die durch einen Funktionsblock 22 zusammengefaßt sind. Die ISDN-Karte 20 übernimmt beispielsweise die Funktion eines ISDN-Telefons, wobei wie üblich Teilfunktionen - wie beispielsweise die Lautsprecherfunktion - eines solchen ISDN-Endgeräts mit Hilfe von originären Bauteilen des Datenendgeräts 9 realisiert werden.

## Patentansprüche

1. ISDN-Endgerät (1) mit einer Datenschnittstelle (7), die zur Kopplung mit einem Datenendgerät (9) dient,
dadurch gekennzeichnet,
daß im ISDN-Endgerät (1) eine aktivierbare/deaktivierbare Befehlssatzerweiterung vorgesehen ist und
daß bei aktivierter Befehlssatzerweiterung durch eine Übertragung von in der Erweiterung enthaltenen Steuerbefehlen vom Datenendgerät (9) über die Datenschnittstelle zum ISDN-Endgerät (1) Änderungen des Betriebszustandes des ISDN-Endgerätes (1) bewirkbar sind.

2. ISDN-Endgerät nach Anspruch 1,
dadurch gekennzeichnet,
daß die Änderungen des Betriebszustandes Verbindungszustandsänderungen des ISDN-Endgeräts (1) sind.

3. ISDN-Endgerät nach Anspruch 1 oder 2,
dadurch gekennzeichnet,
daß eine Aktivierung der Befehlssatzerweiterung eine automatische Übertragung von Informationen, die Betriebszustände des ISDN-Endgeräts (1) betreffen, vom ISDN-Endgerät (1) über die Datenschnittstelle (7) zum Datenendgerät (9) bewirkt.

4. ISDN-Endgerät nach einem der Ansprüche 1 bis 3,
dadurch gekennzeichnet,
daß eine automatische Signalisierung von tatsächlichen oder potentiellen Änderungen des Verbindungszustandes des ISDN-Endgeräts (1) vom ISDN-Endgerät (1) über die Datenschnittstelle (7) zum Datenendgerät (9) vorgesehen ist.

5. ISDN-Endgerät nach einem der Ansprüche 1 bis 4,
dadurch gekennzeichnet,
daß die automatisch zum Datenendgerät (9) übertragenen und Betriebszustände des ISDN-Endgeräts (1) betreffenden Informationen mittels einer Anzeigevorrichtung des Datenendgeräts (9) visualisierbar sind.

6. ISDN-Endgerät nach einem der Ansprüche 1 bis 5,
dadurch gekennzeichnet,
daß eine Zuordnung von jeweils einem eindeutigen Kennzeichen zu einem Verbindungszustand des ISDN-Endgeräts (1) vorgesehen ist.

7. ISDN-Endgerät nach einem der Ansprüche 1 bis 6,
dadurch gekennzeichnet,
daß vorgesehen ist, kommende Rufe an das Datenendgerät (9) zu signalisieren und mit Hilfe des Datenendgeräts (9) aufzuzeichnen.

8. ISDN-Endgerät nach einem der Ansprüche 1 bis 7,
dadurch gekennzeichnet,
daß durch das Datenendgerät (9) eine Selektion von an das ISDN-Endgerät (1) gesendeten Rufen vorgesehen ist, so daß nur eine eingeschränkte Menge der Rufe die Abgabe eines akustischen oder visuellen Rufsignals an den Benutzer bewirkt.

9. ISDN-Endgerät nach einem der Ansprüche 1 bis 8,
dadurch gekennzeichnet,
daß eine Gesprächsdauerermittlung und -aufzeichnung durch das Datenendgerät (9) vorgesehen ist.

10. ISDN-Endgerät nach einem der Ansprüche 1 bis 9,
dadurch gekennzeichnet,
daß der Empfang von bestimmten Rufen durch das ISDN-Endgerät (1) mit einer Aktivierung vorgebbarer Datenverarbeitungszustände im Datenendgerät (9) korrespondiert.

11. Telekommunikationssystem mit einem ISDN-Endgerät (1) mit einer Datenschnittstelle (7) und einem Datenendgerät (9), das über die Datenschnittstelle (7) mit dem Datenendgerät (9) gekoppelt ist,
dadurch gekennzeichnet,
daß im ISDN-Endgerät (1) eine aktivierbare/deaktivierbare Befehlssatzerweiterung vorgesehen ist und
daß bei aktivierter Befehlssatzerweiterung durch eine Übertragung von in der Erweiterung enthaltenen Steuerbefehlen vom Datenendgerät (9) über die Datenschnittstelle zum ISDN-Endgerät (1) Änderungen des Betriebszustandes des ISDN-Endgerätes (1) bewirkbar sind.

12. Datenendgerät (9) mit einer ISDN-Karte (20), die über eine Datenschnittstelle (21) mit mikroprozessorgesteuerten Einheiten (22) des Datenendgeräts 1 gekoppelt ist,
dadurch gekennzeichnet,
daß in der ISDN-Karte (20) eine aktivierbare/deaktivierbare Befehlssatzerweiterung vorgesehen ist und
daß bei aktivierter Befehlssatzerweiterung durch eine Übertragung von in der Erweiterung enthaltenen Steuerbefehlen über die Datenschnittstelle zur ISDN-Karte (20) Änderungen des Betriebszustandes der ISDN-Karte (20) bewirkbar sind.
